(19) Europäisches Patentamt
European Patent Office
Office européen des brevets

(11) **EP 2 091 195 B1**

(12) **EUROPEAN PATENT SPECIFICATION**

(45) Date of publication and mention
of the grant of the patent:
**22.12.2010 Bulletin 2010/51**

(51) Int Cl.:
***H04L 27/26*** *(2006.01)*

(21) Application number: **08002948.1**

(22) Date of filing: **18.02.2008**

(54) **Method and apparatus for determining a sub-frame configuration**

Verfahren und Gerät zur Bestimmung der Konfiguration eines Unterrahmens

Procédé et dispositif pour déterminer une configuration de sous-trame

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**19.08.2009 Bulletin 2009/34**

(73) Proprietor: **Telefonaktiebolaget LM Ericsson (publ)**
**164 83 Stockholm (SE)**

(72) Inventors:
• **Mueller-Weinfurtner, Stefan**
**90409 Nürnberg (DE)**

• **Brueninghaus, Karsten**
**38259 Salzgitter (DE)**
• **Wachsmann, Udo**
**91126 Schwabach (DE)**

(74) Representative: **Röthinger, Rainer**
**Wuesthoff & Wuesthoff**
**Patent- und Rechtsanwälte**
**Schweigerstrasse 2**
**81541 München (DE)**

(56) References cited:
**WO-A-2007/035810     US-A1- 2006 176 966**

## Description

### Technical Field

The invention generally relates to a communication system such as a mobile communication system. Particularly, the invention relates to a technique for determining, or detecting, the configuration of a sub-frame of a data frame transmitted within the communication system.

### Background

The 3$^{rd}$ generation (3G) technologies are becoming the global solution to mobile communications. Universal Mobile Telecommunication System (UMTS) is a major 3G technology. In order to ensure the competitiveness of the UMTS technology, the 3$^{rd}$ Generation Partnership Project (3GPP) has initiated a project named Long Term Evolution (LTE). LTE aims at improving UMTS to cope with future requirements. Such requirements are, among others, higher data rates, better spectrum utilisation, lower latency, improved services, lower costs, and better integration with open standards.

3GPP technical specification TS 36.211, version 8.0.0, describes the air interface recommended by 3GPP for the LTE technology. The air interface is termed as Evolved Universal Terrestrial Radio Access (E-UTRA). LTE and E-UTRA are sometimes used interchangeably.

The proposed E-UTRA air interface uses Orthogonal Frequency Division Multiplex (OFDM) for the downlink transmission. In an OFDM system, the available spectrum is divided into multiple closely-spaced carriers, called sub-carriers, which are orthogonal to each other. Each sub-carrier is independently modulated by a stream of low rate data symbols. Since data symbols are independently modulated and transmitted over a large number of orthogonal sub-carriers, the OFDM system exhibits numerous benefits including robustness against multi-path fading and efficient receiver architecture.

OFDM symbols may be generated using Inverse Fast Fourier Transform (IFFT) digital signal processing as, for example, described in 3GPP technical report TS 25.892. The IFFT converts a number N of complex-valued data symbols used as frequency domain bins into a time domain signal.

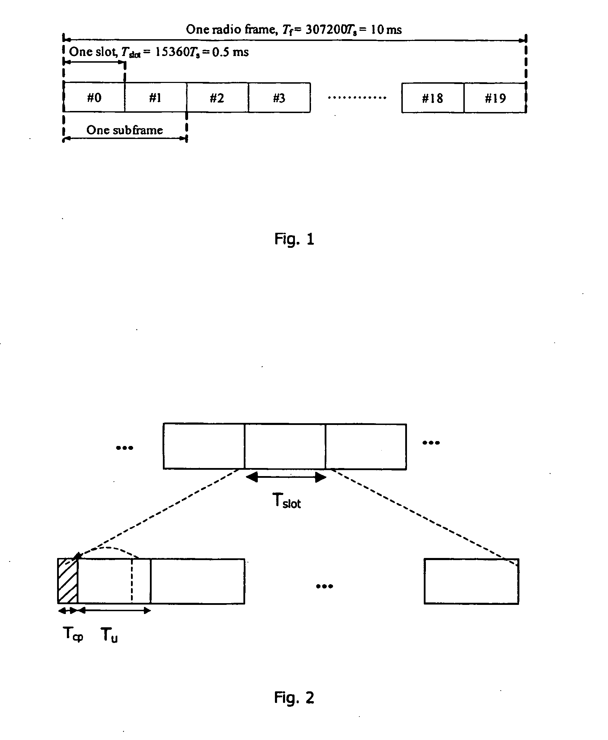

In any wireless communication system, data transmission is usually organised into a series of radio frames having a certain period, or length. The LTE system supports a number of frame configurations, an example of which is shown in Fig. 1. In this example, which will be explained in detail below, an LTE radio frame comprises one or more sub-frames, a sub-frame comprises one or more data units called slots, and a slot comprises a set of OFDM symbols. Throughout this application, unless otherwise noted, the size of various transmission entities (such as frames, sub-frames and slots) in the time domain is expressed as a number of time units $T_s = 1/(15000 \times 2048)$ seconds.

The current LTE technology features a number of different configurations of sub-frames comprised in LTE radio frames, particularly for use in downlink OFDM transmission in a Frequency Division Duplex (FDD) mode. The sub-frame configuration of an LTE FDD cell, or service area of an LTE base station, may determine, among other things, the number of OFDM symbols per sub-frame and the duration of individual OFDM symbols.

In a wireless communication system using LTE, the user equipment (UE) needs, during the initial cell search, to detect the sub-frame configuration specific to the LTE cell. This is one of the first steps to achieve synchronisation with the LTE base station thereby to be able to receive the downlink data therefrom. Usually, during the cell search, other parameters such as frequency-offset estimation and/or symbol and radio frame timing may also be detected. Detection, or determination, of the sub-frame configuration is a new problem in wireless communication, which does not exist in prior standards such as the GSM (the 2$^{nd}$ generation) or UMTS standard.

US 2006/0176966 A1 relates to a method for data transmission in a wireless communication network wherein different data symbols associated with different transmission modes are formatted with different cyclic prefixes.

### Summary

Therefore, it is one object to propose a solution to effectively determine the sub-frame configuration associated with a data signal.

According to a first aspect, a method of determining a sub-frame configuration is provided, the sub-frame being a sub-unit or sub-section of a data frame. The sub-frame comprises a set of data symbols, and each data symbol comprises a cyclic prefix. The basic steps of the method include receiving a data signal comprising at least one sub-frame having a specific sub-frame configuration, wherein there exists a plurality of different possible sub-frame configurations with each sub-frame configuration being identifiable by an associated cyclic prefix length, analyzing the data signal or a portion thereof to identify a cyclic prefix length associated therewith, and determining the configuration of the sub-frame included in the data signal based on the identified cyclic prefix length.

A sub-frame may take different "formats" (i.e. there may exist a plurality of sub-frame configurations). The sub-frame configuration of a received data signal may a priori not be known. Thus, the sub-frame configuration may need to be determined first before initiating further processing operations with respect to the received data signal. In the framework of the disclosure, a sub-frame configuration is associated with a certain cyclic prefix length. Effectively speaking, the sub-frame configuration is identifiable by an associated cyclic prefix length.

The analysis step may be performed in various ways. For example, the analysis step may comprise evaluating one or more hypotheses (i.e. possibilities) of the cyclic prefix length with respect to the data signal or a portion thereof to produce one or more corresponding evaluation results. Based on the one or more evaluation results, a most-likely cyclic prefix length may then be decided, according to which the sub-frame configuration is determined.

When evaluating each hypothesis of the cyclic prefix length, an autocorrelation of a data sample including the sub-frame may be performed to produce an autocorrelation result. The autocorrelation may be performed over a pre-determined period. The autocorrelation may be of a complex-valued nature; for example, a complex congregate of the sample delayed by a pre-determined length is multiplied with a current value of the sample.

The data frame (and its one or more sub-frames) may be divided into a number of smaller data units, or "slots". One slot may include a certain number of the data symbols comprised in one sub-frame and, in turn, in the entire data frame. Assuming that the number of slots comprised in one data frame equals $C_{slot}$ and that the duration period of a slot equals $P_{stot}$, then the above mentioned evaluation step may further comprise, with respect to each hypothesis of the cyclic prefix length, performing $C_{slot}$ cyclic accumulations of the autocorrelation result with the period $P_{slot}$. As a result of the $C_{slot}$ cyclic accumulations, an output signal may be produced for the respective hypothesis. It is to be understood that the number of cyclic accumulations performed to obtain the output signal is a design choice. In other words, the output signal could alternatively be obtained from performing more or less than $C_{slot}$ cyclic accumulations using a suitable period.

This output signal may undergo further signal processing. For instance, a further number of cyclic accumulations of the output signal may be performed with a periodicity vector so as to produce an accumulation result. The number of such further cyclic accumulations, denoted as C, may equal the number of data symbols in the slot corresponding to the hypothesis under evaluation. Further, for the accumulation result obtained, a maximum magnitude thereof may be computed and may be regarded as the evaluation result for the hypothesis. The C cyclic accumulations with respect to each hypothesis may be performed either serially or in parallel.

As to the periodicity vector mentioned above, it may comprise a set of elements which can form different sequences, with each sequence corresponding to a possible start of the sub-frame. In this case, the C cyclic accumulations with the periodicity vector are for example performed with respect to each possible sequence. Alternatively, the C cyclic accumulation with the periodicity factor may be performed with respect to a certain possible sequence only. Further, the C cyclic accumulation with respect to different sequences of the periodicity vector may be performed either serially or in parallel.

With respect to each different sequence of the periodicity vector, a maximum magnitude of the accumulation result of the C cyclic accumulations may be computed. The largest one of the maximum magnitudes may be selected as the evaluation result for the respective hypothesis.

Following the evaluation of the hypotheses, a most-likely cyclic prefix length can be decided based on the evaluation results. This deciding step may comprise, with respect to each hypothesis, weighting the evaluation result by a factor that accounts for the number of data symbols collected during the respective cyclic accumulations. This weighting computation may be performed either during or after the last pass of the cyclic accumulations. As a result, a weighted evaluation result is produced with respect to each hypothesis.

The values of the weighted evaluation results corresponding to all the hypotheses may be different. Thus, the deciding step may further comprise a step of searching for a maximum value among the weighted evaluation results to thereby decide on the most-likely cyclic prefix length.

The maximum searching may be masked with an a priori sub-frame configuration. This means, for example, that if it has been decided a priori that a certain configuration is impossible, the corresponding evaluation result will be ignored in the maximum search, even though it may yield the maximum value.

According to a second aspect, a computer program product is provided for performing the steps mentioned above when the computer program product is executed on a computing device or a component thereof. The invention can be practised by means of hardware, software, or hardware/software combined. As for a software aspect, the computer program product may be stored on a computer readable recording medium.

According to a further aspect, an apparatus adapted to determine a sub-frame configuration is provided. The sub-frame is part of a data frame and includes a set of data symbols each comprising a cyclic prefix. As said above, there may exist different sub-frame configurations, each of which being identifiable by an associated cyclic prefix length. Particularly, the apparatus comprises the following components: an input unit adapted to receive a data signal comprising at least one sub-frame having a specific sub-frame configuration; an evaluation unit adapted to analyze the data signal or a portion thereof to identify a cyclic prefix length associated with the data signal; and a determination unit adapted to determine the configuration of the sub-frame included in the data signal based on the identified cyclic prefix length; and an output unit adapted to output the determined sub-frame configuration.

In one variation, the evaluation unit is adapted to evaluate one or more hypotheses of the cyclic prefix length with respect to the data signal or a portion thereof to produce one or more evaluation results. In this variation, the determination unit may be adapted to decide on a most-likely cyclic prefix length based on the evaluation results produced by the evaluation unit. The determination unit may further be adapted to determine the sub-frame configuration according to the most-likely cyclic prefix length thus decided.

The evaluation unit of the apparatus may be adapted to perform an autocorrelation of a sample including the sub-frame over a pre-determined period so as to produce an autocorrelation result. Particularly, the evaluation unit may be adapted to perform a complex-valued autocorrelation, e.g. by multiplying a complex conjugate of the sample delayed by a pre-determined length with a current value of the sample.

As already mentioned above, the frame (and its one or more sub-frames) may comprise a set of slots. Assuming that the entire data frame comprises $C_{slot}$ slots and one slot having a duration period of $P_{slot}$, the evaluation unit of the apparatus may be adapted to, with respect to each hypothesis under evaluation, perform $C_{slot}$ cyclic accumulations of an autocorrelation result with a period $P_{slot}$ to thereby produce an output signal. Of course, the output signal could alternatively be obtained from more or less than $C_{slot}$ cyclic accumulations.

The evaluation unit may be further adapted to, with respect to each hypothesis under evaluation, perform C cyclic accumulations of the output signal with a periodicity vector, thereby to produce an accumulation result for the hypothesis. C stands for the number of data symbols comprised in the slot corresponding to the hypothesis under evaluation.

Moreover, the evaluation unit may be adapted to, with respect to each hypothesis under evaluation, compute a maximum magnitude of the accumulation result. The maximum magnitude is regarded as the evaluation result for this hypothesis.

The determination unit of the apparatus may be further adapted to, with respect to each hypothesis of the cyclic prefix length, weight the evaluation result (produced by the evaluation unit) by a factor that accounts for the number of data symbols selected during the respective cyclic accumulations. The determination unit thus produces a weighted evaluation result.

Further, the determination unit may be adapted to search for a maximum value from all the weighted evaluation results corresponding to all the hypotheses evaluated. The search result thus gives the most-likely cyclic prefix length.

As a yet further aspect of the invention, an application-specific integrated circuit (ASIC) comprising the apparatus mentioned above is provided. The ASIC may be adapted for base-band data transmission. The ASIC may be integrated in a data card or a user terminal of a data communication system. Typical examples of such user terminals are mobile telephones, laptops, and Personal Digital Assistants (PDAs), just to name a few. The ASIC, or the data cards or user terminals, may be used in a wireless communication system in accordance with the LTE standard or any other standard.

**Brief Description of the Drawings**

In the following, the invention will be described in more detail with reference to exemplary embodiments illustrated in the drawings, wherein:

Fig. 1 is a diagram showing a particular LTE radio frame structure used for LTE downlink communication;

Fig. 2 is a diagram showing a particular configuration of a sub-frame (comprising two slots) of an LTE radio frame;

Fig. 3 is a table presenting an overview of some sub-frame configurations and their corresponding parameters of the particular LTE sub-frame structure shown in Fig. 2;

Fig. 4 is a schematic diagram showing the basic functional blocks of an embodiment, specifically, a function of Downlink Cyclic Prefix Autocorrelation (DCPA) and a function of Downlink Cyclic Prefix Length Detection (DCPL);

Fig. 5 is a schematic diagram showing sub-functional blocks comprised in the DCPA functional block;

Fig. 6 is a schematic diagram illustrating, in detail, a specific example of performing the downlink cyclic prefix autocorrelation with the assistance of the DCPA block;

Fig. 7 is a chart showing the performance of a method embodiment; and

Fig. 8 is a chart showing the performance of another method embodiment.

**Description of Preferred Embodiments**

In the following, for purposes of explanation and not limitation, specific details are set forth to provide a thorough understanding of the present invention. It will be apparent to one skilled in the art that the invention may be practised in other embodiments that depart from these specific details. In particular, the person skilled in the art will appreciate that one or more of the functions explained herein below may be implemented using individual hardware components, using software functioning in conjunction with a programmed microprocessor or general purpose computer, using an integrated circuit such as an application specific integrated circuit (ASIC) and/or using one or more digital signal processors (DSP).

The LTE technology that will be considered in the context of the following embodiments supports a number of frame structures for downlink transmission, an example of which is shown in Fig. 1. This structure is applicable to LTE downlink communication in both full duplex mode and half duplex mode; it is also applicable to both the frequency division duplex (FDD) mode as well as the time division duplex (TDD) mode. According to this particular structure, an LTE radio data frame has a total duration period, or length, of $T_f = 307200 \times T_s = 10$ ms. The LTE radio frame is divided into, or comprises, a set of slots, e.g. 20 slots numbered from 0 to 19, each of length $T_{slot} = 15360 \times T_s = 0.5$ ms. An LTE sub-frame is defined as a set of 2 consecutive slots. The LTE radio frame illustrated in Fig. 1 thus contains 10 sub-frames.

Although the LTE radio frame shown in Fig. 1 is 10 ms long and is divided into 20 equally-sized slots and each sub-frame consists of 2 consecutive slots, it can be well appreciated by those skilled in the art that many different configurations can be defined for the data frame (and its sub-frames) by, e.g., varying the number of data symbols in a slot.

A data frame may comprise data symbols such as, but not limited to, OFDM symbols. Typically, a sub-frame (as well as a slot within the data frame) comprises a set of such data symbols. To each data symbol, a cyclic prefix (CP) is appended as guard period as is well known in the art. One technique of generating the cyclic prefix is to copy the end portion of an (original) OFDM symbol and append the copy to the front of the symbol, thus slightly extending the (original) symbol duration $T_u$ by $T_{cp}$. This copying and appending is illustratively shown in Fig. 2 for one OFDM symbol in a slot.

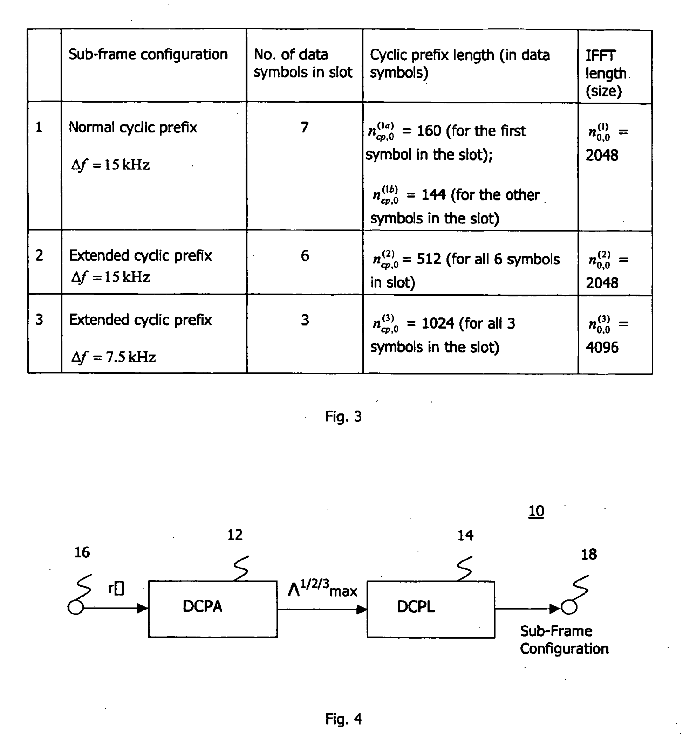

Depending on the number of data symbols comprised in a slot and the lengths of the cyclic prefixes appended to the symbols within the slots, different sub-frame configurations can be designed. For example, three sub-frame configurations may be defined with respect to the LTE radio frame structure of Fig. 1: a "Normal cyclic prefix" configuration and two "Extended cyclic prefix" configurations. An overview of these three sub-frame configurations and their corresponding parameters is given in the table of Fig. 3.

The "Normal cyclic prefix" configuration is defined as comprising seven data symbols per slot, the first symbol having a cyclic prefix length of $T_{cp} = 5.2$ $\mu$s (i.e. equivalent to the duration of 160 data symbols), and the remaining six symbols having a cyclic prefix length of $T_f = 4.7$ $\mu$s each (i.e. equivalent to the duration of 144 data symbols). In case of OFDM data symbols, the sub-carrier spacing is set at 15 kHz.

The first "Extended cyclic prefix" configuration (assuming sub-carrier spacing at 15 kHz in case of OFDM data symbols) can be defined as comprising six data symbols per slot, each symbol having a cyclic prefix length of $T_{cp-e} = 16.7$ $\mu$s (i.e. 512 data symbols). The second "Extended cyclic prefix" configuration (assuming sub-carrier spacing at 7.5 kHz in case of OFDM data symbols) may be defined to comprise 3 data symbols per slot with a cyclic prefix length of $T_{cp-e2} = 33.3$ $\mu$s.

Since a sub-frame configuration is associated with, and thus identifiable by, a particular cyclic prefix length as illustrated in Fig. 3, cyclic prefix length detection has been identified as an adequate means to indirectly determine the sub-frame configuration. The following embodiments extend this basic idea in a sense that different hypotheses of cyclic prefix length are evaluated and decided in favour of a most-likely one, which then indicates the sub-frame configuration.

Referring to Fig. 4, the sub-frame configuration determination 10 can be implemented, either as a method or an apparatus, with the assistance of two basic functional blocks: a Downlink Cyclic Prefix Autocorrelation (DCPA) function 12 and Downlink Cyclic Prefix Length Detection (DCPL) function 14. These functional blocks are implemented, for example, in a mobile terminal such as a mobile telephone or a network card.

DCPA 12 is a pre-processing and analysis function which performs, among other things, correlation of data samples, cyclic accumulations of the correlation results, and search for maximum magnitude within the results of the cyclic accumulations. As to be described in detail below, all this is done with different parameters which characterize the different sub-frame configurations.

DCPL 14, as a post-processing of the evaluation results from DCPA 12, decides on the most-likely cyclic prefix length. According to the most-likely cyclic prefix length thus decided, the (most-likely) sub-frame configuration is determined.

Apart from the basic functional blocks DCPA 12 and DCPL 14, an input, or receiving function, 16 can be added as an option. Via the input 16, a data signal (or a series of data signals) which includes the sub-frame under question can be received, which is then passed to the DCPA 12 for evaluation. The input 16 may be coupled to receiver components of the mobile terminal.

Likewise, an output or transmitting function 18 can be connected to the DCPL functional block 14. The most-likely cyclic prefix length and/or most likely sub-frame configuration finally determined at the DCPL 14 can be transmitted to other signal processing components of the mobile terminal via the output 18.

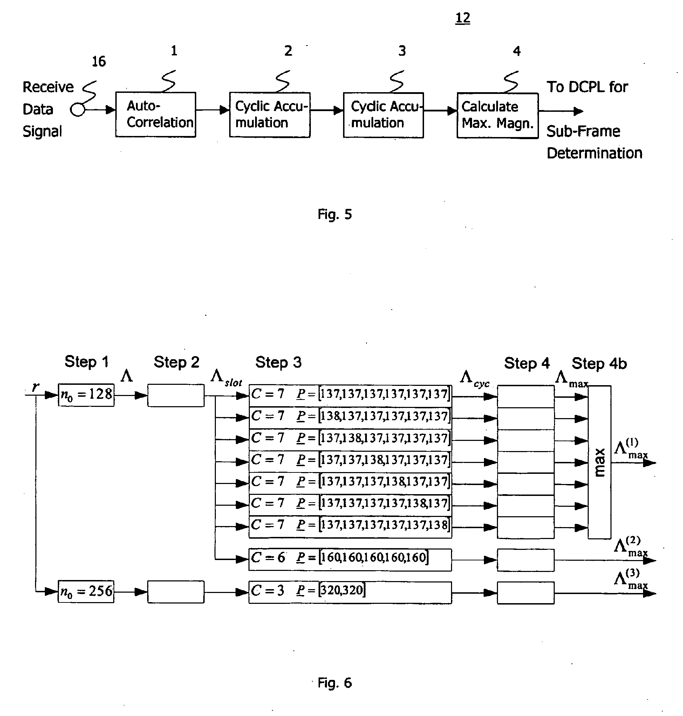

Fig. 5 schematically shows four major processing steps performed by the DCPA functional block 12. At the first step 1, upon receiving, e.g. from the input unit 16, a data signal comprising the sub-frame, DCPA 12 performs an autocorrelation of a sample (of the data signal including the sub-frame) to produce an autocorrelation result. The autocorrelation is performed over a predetermined period. The autocorrelation could be a complex-valued autocorrelation. For example, the DCPA 12 performs a sliding window accumulation of $w$ results obtained from multiplying the complex conjugate of the data samples delayed by a pre-determined time period $n_0$, with the current samples, which can be denoted as r[$n$]. Mathematically this is,

$$\text{Step 1: } \Lambda[n] = \sum_{i=0}^{w-1} r^*[n+i-n_0]r[n+i] .$$

The length of the sliding window, $w$, is a pre-determined compromise parameter, which can be calculated as will be described below.

Boundaries of consecutive data symbols, e.g. OFDM symbols, feature a separation defined by the cyclic prefix length $n_{cp}$ plus the IFFT window length $n_0$. The parameters for the three different sub-frame configurations are listed in the table of Fig. 3.

Using the basic time unit $T_s$ = 1/ (15000 x 2048) seconds, the full sample rate may be defined as $r_{s,0}$=1/$T_s$ = 30.72 MHz. The receiver can operate at a reduced sampling rate $r_s = r_{s,0}$/ $D$ (D being an integer and usually chosen to be a power of 2). Obviously, the parameters in Fig. 3 change accordingly, i.e. $n_{cp} = n_{cp,0}$/$D$ and $n_0 = n_{0,0}$/D. During cell search, the typical choice is D = 16 after low-pass filtering to cover the 72 core sub-carriers, only. This mode could always be used, even when the LTE cell bandwidth is larger.

The autocorrelation result in respect of each hypothesis of the cyclic prefix length is passed to a second step 2 of the DCPA 12, which performs a cyclic accumulation of the autocorrelation result. Particularly, the second step consists of $C_{slot}$ cyclic accumulations with a time period $P_{slot}$, where $C_{slot}$ is the number of slots in one data frame, e.g. equal to the number of slots in a LTE radio frame, and $P_{slot}$ corresponds to the duration period of a slot within the data frame. Mathematically, this is:

$$\text{Step 2: } \Lambda_{slot}[n] = \sum_{c=0}^{C_{slot}-1} \Lambda[n - cP_{slot}] \text{ for } 0 \le n < P_{slot} .$$

As a particular example, a period of $P_{slot}$ = 15360/D can be used, which corresponds to one slot (i.e., 0.5 ms duration) in the data frame structure shown in Fig. 1. With maximum initial reference oscillator offset of 15 ppm, it is possible to gather up to $C_{slot}$ = 20 slots, i.e., an entire LTE radio frame, with an acceptable sample drift.

The result of the $C_{slot}$ cyclic accumulation with respect to each hypothesis is output from the second step 2 to the third step 3. At the third step, C cyclic accumulations of the output signal (from step 2) are performed with a periodicity vector $\underline{P}$ to produce an accumulation result, where C is the number of data symbols in the slot corresponding to the hypothesis under evaluation and the periodicity vector $\underline{P}$ may be expressed as $\underline{P} = [P_1,..., P_{C-1}]$. Mathematically, step 3 reads

$$\text{Step 3: } \Lambda_{cyc}[n] = \sum_{c=0}^{C-1} \Lambda_{slot}[n - \sum_{i=1}^{c} P_i] \text{ for } 0 \le n < \min_i P_i ,$$

where the sum in the argument is defined to equate to zero for upper limit $c$ = 0. The different $P_i$ results from the different cyclic prefix lengths, e.g. in the sub-frame configuration 1 in Fig. 3.

In the simplest case with identical CP lengths, $P_i = P$, the equation simplifies to

$$\Lambda_{cyc}[n] = \sum_{c=0}^{C-1} \Lambda_{slot}[n - cP] \text{ for } 0 \le n < P .$$

In the fourth step 4, the maximum squared magnitude of the accumulated correlation result shall be computed.

$$\text{Step 4: } \Lambda_{max} = \max_n \left| \Lambda_{cyc}[n] \right|^2$$

The computation can be done during or after the last pass of cyclic accumulation.

All the four steps above need to be performed for each of the hypotheses to be evaluated. An exemplary realization is depicted in Fig. 6, assuming a sampling rate of 1.92 MHz, i.e. D = 16 so that $P_{slot}$ = 960. The relevant parameters for the individual branches for the hypothesis evaluation are given below:

1. $$n_0^{(1)} = 128, \ C^{(1)} = 7, \ P_i^{(1)} \in \{n_{cp}^{(1a)} + n_0^{(1)}, n_{cp}^{(1b)} + n_0^{(1)}\} = \{137, 138\}$$

2. $$n_0^{(2)} = 128, \ C^{(2)} = 6, \ P_i^{(2)} = P^{(2)} = n_{cp}^{(2)} + n_0^{(2)} = 160$$

3. $$n_0^{(3)} = 256, \ C^{(3)} = 3, \ P_i^{(3)} = P^{(3)} = n_{cp}^{(3)} + n_0^{(3)} = 320$$

Since sub-frame configurations 1 and 2 use the same value for $n_0$, only two parallel processes of step 1 are required. For cyclic accumulation, it is important to note that $P^{(2)}$ and $P^{(3)}$ are fixed, each, while $P^{(1)}$ may vary. This gives the opportunity to distinguish between two modes.

Mode-1: Suppose the sub-frame start is unknown, then there are 7 seven different sequences possible for $P_i^{(1)}$ (at least six times 137 and up to one 138), so that step 3 shall use 7+2 = 9 parallel cyclic accumulations. In the latter case, a pre-selection (step 4b) may be optionally performed to select, among those 7 hypotheses for sub-frame configuration 1, the maximum one to obtain $\Lambda_{max}^{(1)}$. Note that the pre-selection is not really necessary in DCPA, since it could equivalently be handled in DCPL with slightly larger interface between these two blocks.

Mode-2: If the sub-frame start is known or can be ignored, one single sequence $P_i^{(1)}$ may be defined. Therefore, it is sufficient to simply compute only one (e.g., the first) instead of all seven periodicity hypotheses. This means that step 3 may use only 1+2 = 3 parallel cyclic accumulations. This is an interesting alternative, if there is a bottleneck in terms of computational complexity.

In principle, step 2 and step 3 may be exchanged; but this could be computationally expensive in Mode 1, since step 2 needs to be performed for each of the 9 output signals of step 3.

Returning to Fig. 4, the final evaluation results corresponding to all the hypotheses are output from the DCPA 12 to DCPL 14, where the most-likely cyclic prefix length is decided. Specifically, the DCPL 14 performs, among other things, weighting the evaluation result in respect each hypothesis by a factor that accounts for the number of data symbols collected during the respective cyclic accumulations, and searching for a maximum value from the weighted evaluation results thus to decide on the most-likely cyclic prefix length.

Referring to the specific example described for Fig. 5 above, results from DCPA 12 are input to DCPL 14. The hypothesis connected with the maximum value from all the weighted evaluation results, i.e.

$$\max\left(6 * 3 * \Lambda_{max}^{(1)}, \ 7 * 3 * \Lambda_{max}^{(2)}, \ 7 * 6 * \Lambda_{max}^{(3)}\right)$$

represents the detected sub-frame configuration. The different weighting of the maximum values in the above equation accounts for the different number of data symbols collected during cyclic accumulation, which may be 7 in cyclic accumulation buffer (1), 6 in buffer (2), or 3 in buffer (3). Factor three could be removed from all operands to maximum search, but is left in the equation for clearness of mutual relationship. The maximum search can be masked with a priori possible and impossible sub-frame configurations.

As a by-product of the sub-frame configuration detection, a rough estimate for data symbol timing can be derived from the time position which corresponds to the detected maximum hypothesis. For example, referring to step 4, it can initially be recorded, for each of the up to 9 $\Lambda_{cyc}[n]$'s, the particular n that yields the $\Lambda_{max}$. Then (at after the DCPL 14) the specific n can be retrieved from the 9 candidates for n which corresponds to the overall maximum. This n then gives the desired time position.

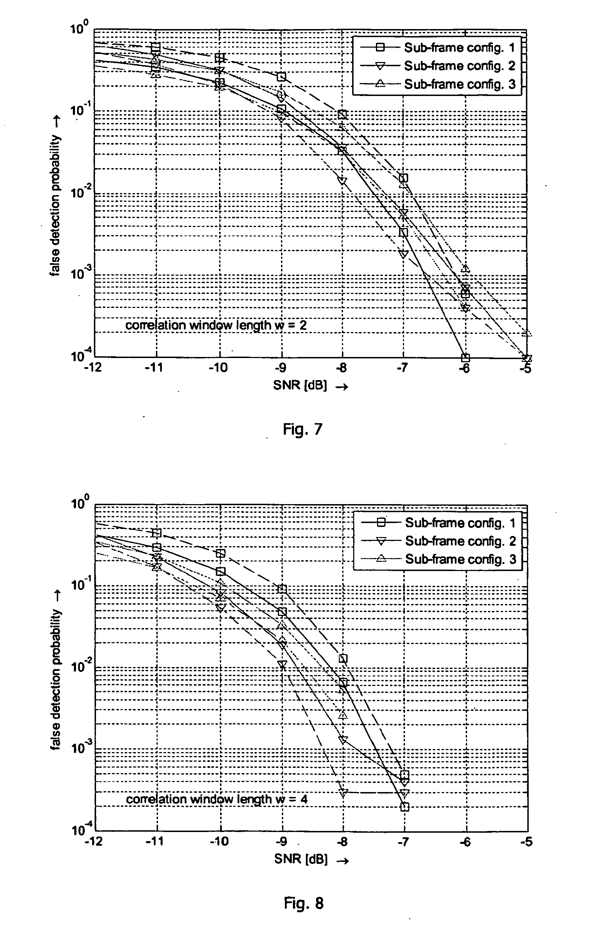

Further, a rough estimate for carrier frequency offset can be obtained by evaluating $\arg(\Lambda_{cyc}[n])$ corresponding to the detected maximum hypothesis at the time position of the previous subsection. This estimate exhibits an uncertainty in multiples of a sub-carrier spacing, which is integer multiples of $\pm$ 15 kHz (for sub-frame configurations 1 and 2) or integer multiples of $\pm$ 7.5 kHz (for sub-frame configuration 3). The performance chart of Fig. 7 shows the rate at which a given sub-frame configuration is wrongly detected as function of the time-domain sample-by-sample Signal-to-Noise Ration (SNR). Results are obtained from a simplified simulation model with additive white Gaussian noise. The parameter $w = 2$ is chosen as reasonable compromise for cell search, during which channel propagation conditions are unknown.

Solid lines show the Mode-1 algorithm as described above. The slightly degraded performance shown in dashed lines is achieved with the Mode-2 algorithm, which for $C^{(1)} = 7$ computes only the first instead of all seven periodicity hypotheses. This clearly leads to increased false detection of sub-frame configuration 1 and reduced false detection of sub-frame configurations 2 and 3. The false detection rates are much more homogeneous if the Mode-1 detection is employed. Hence, the Mode-1 of the proposed algorithm evaluates all seven hypotheses for sub-frame configuration 1.

When comparing window length $w = 2$ in Fig. 7 to $w = 4$ in Fig. 8, it can be appreciated that the gain in false detection rate is a small value, around 0.7 dB. Thus, for initial LTE cell search, it may be preferred to set $w = 2$ with D = 16.

For a technical realization, the DCPA 12 and/or DCPL 14 may be implemented in hardware and/or software. As a example, the DCPA functionality 12 may be implemented in hardware exposing a suitable interface to a programmable device, such as a processor or an ASIC, on which DCPL functionality 14 may be implemented in the form of software.

Alternatively, the DCPA 12 and DCPL 14 may both be integrated in an application-specific integrated circuit (ASIC). The ASIC may be adapted for base-band data transmission. The ASIC may be integrated in a data (or network) card or in a user terminal of a data communication system. Typical examples of such user terminals are mobile telephones, laptops, PDAs, just to name a few. The ASIC, or the data cards or user terminals, may be used in a wireless communication system such as LTE.

The techniques for determining sub-frame configuration described above is one ingredient to enable initial cell search in an LTE communication system. It allows using almost all available downlink signal energy for the desired detection task, which may also start at an arbitrary time instant within a radio frame. This is in contrast to Synchronization Signal (SSIG) - based cyclic prefix detection according to which the distance between directly adjacent synchronization signals is determined. In an exemplary LTE realization, the distance between the primary synchronization signal (P-SSIG) and the secondary synchronization signal (S-SSIG) could be detected to obtain an indication of the cyclic prefix length. Such SSIG pairs occur once every 5 ms in the downlink, which provides limited signal energy for detection. A further drawback is the fact that the detection can only be performed at two defined time instants within a radio frame.

What has been described above are various exemplary techniques for determining the sub-frame configuration of an LTE radio frame. While the invention has been described with respect to particular embodiments, those skilled in the art will recognize that the invention is not limited to the specifics described and illustrated herein. As can be appreciated, the proposed solution according to the invention is not limited to the LTE downlink alone, but is equally applicable to other data communication scenarios involving the similar concept of data unit configuration. Therefore, while the invention has been described in relation to exemplary embodiments, it is to be understood that this disclosure is only illustrative. Accordingly, it is intended that the invention be limited only be the scope of the claims appended hereto.

**Claims**

1.  A method of determining a configuration of a sub-frame of a data frame, the sub-frame comprising a set of slots each comprising a set of data symbols, each data symbol comprising a cyclic prefix, the method comprising the steps of:

    - receiving a data signal comprising at least one sub-frame having a specific sub-frame configuration which indicates at least the number of data symbols per slot, wherein there exists a plurality of possible sub-frame configurations with each sub-frame configuration being identifiable by an associated cyclic prefix length;
    - analyzing the data signal or a portion thereof to identify a cyclic prefix length associated therewith; and
    - determining the configuration of the sub-frame included in the data signal based on the identified cyclic prefix length.

2.  The method of claim 1, wherein the analysis step comprises:

    - evaluating one or more hypotheses of the cyclic prefix length with respect to the data signal or a portion thereof to produce one or more evaluation results; and
- deciding on a most-likely cyclic prefix length based on the one or more evaluation results.

3. The method of claim 2, wherein the evaluation step comprises, with respect to each hypothesis:

- performing an autocorrelation of a sample including the sub-frame over a predetermined period to produce an autocorrelation result.

4. The method of claim 3, wherein the autocorrelation step comprises:

- multiplying a complex-conjugate of the sample delayed by a predetermined length with the current value of the sample.

5. The method of claim 3 or 4, wherein the data frame further comprises a set of slots, and wherein the evaluation step further comprises, with respect to each hypothesis:

- performing one or more cyclic accumulations of the autocorrelation result to produce an output signal.

6. The method of claim 5, wherein the evaluation step further comprises, with respect to each hypothesis:

- performing C cyclic accumulations of the output signal with a periodicity vector to produce an accumulation result, C being the number of data symbols in the slot corresponding to the evaluated hypothesis.

7. The method of claim 6, wherein the evaluation step further comprises, with respect to each hypothesis:

- computing a maximum magnitude of the accumulation result as an evaluation result for the hypothesis.

8. The method of claim 6 or 7, wherein the C cyclic accumulations with respect to the different hypotheses are performed in parallel.

9. The method of any of claims 6 to 8, wherein the periodicity vector comprises a set of elements having the potential of forming different sequences, each sequence corresponding to a possible sub-frame start, the evaluation step further comprising:

- performing the C cyclic accumulations with the periodicity vector in respect of each possible sequence or in respect of a certain sequence only.

10. The method of claim 9, wherein the C cyclic accumulations with respect to different sequences are performed in parallel.

11. The method of claim 9 or 10, wherein the evaluation step further comprises

- computing, with respect to each of the different sequences, a maximum magnitude of the accumulation result of the C cyclic accumulations; and
- selecting the largest one of the computed maximum magnitudes as the evaluation result for the respective hypothesis.

12. The method of any claims 5 to 11, wherein the deciding step comprises, with respect to each hypothesis of the cyclic prefix length,

- weighting each evaluation result by a factor that accounts for the number of data symbols collected during the respective cyclic accumulations to produce a weighted evaluation result.

13. The method of claim 12, wherein the weighting computation is performed during or after the last pass of cyclic accumulation.

14. The method of claim 12 and 13, wherein the deciding step further comprises:

- searching for a maximum value from the weighted evaluation results corresponding to all the hypotheses of the cyclic prefix length thus deciding on the most-likely cyclic prefix length.

15. The method of claim 14, wherein the maximum searching is masked with an a-priori possible sub-frame configuration.

16. A computer program product comprising program code portions for performing the steps of any of the claims 1 to 15 when the computer program product is run on a computer system.

17. A computer program product of claim 16, stored on a computer readable recording medium.

18. An apparatus (10) adapted to determine a configuration of a sub-frame of a data frame, said sub-frame comprising a set of slots each comprising a set of data symbols, each data symbol comprising a cyclic prefix, the apparatus comprising:

- an input (16) adapted to receive a data signal comprising at least one sub-frame having a specific sub-frame configuration which indicates at least the number of data symbols per slot, wherein there exists a plurality of possible sub-frame configurations with each sub-frame configuration being identifiable by an associated cyclic prefix length;
- an evaluation unit (12) adapted to analyze the data signal or a portion thereof to identify a cyclic prefix length associated therewith;
- a determination unit (14) adapted to determine the configuration of the sub-frame included in the data signal based on the identified cyclic prefix length; and
- an output (18) adapted to output the sub-frame configuration.

19. The apparatus of claim 18, wherein the evaluation unit (12) is adapted to evaluate one or more hypotheses of the cyclic prefix length with respect to the data signal or a portion thereof to produce one or more correlation results; and wherein the determination unit (14) is adapted to decide on a most-likely cyclic prefix length based on the one or more evaluation results.

20. The apparatus of claim 19, wherein the evaluation unit (12) is further adapted to perform an autocorrelation of a sample including the sub-frame over a predetermined period to produce an autocorrelation result.

21. The apparatus of claim 20, wherein the data frame comprises a set of slots, and wherein the evaluation unit (12) is further adapted to, with respect to each hypothesis, perform one or more cyclic accumulations of the autocorrelation result to produce an output signal.

22. The apparatus of claim 21, wherein the evaluation unit (12) is further adapted to, with respect to each hypothesis, perform C cyclic accumulations of the output signal with a periodicity vector to produce an accumulation result, C being the number of data symbols in the slot corresponding to the evaluated hypothesis.

23. The apparatus of claim 22, wherein the evaluation unit (12) is further adapted to, with respect with respect to each hypothesis, compute a maximum magnitude of the accumulation result as an evaluation result for the hypothesis.

24. The apparatus of claim 23, wherein the determination unit (14) is further adapted to, with respect to each hypothesis of the cyclic prefix length, weight the evaluation result by a factor that accounts for the number of data symbols collected during the respective cyclic accumulations to produce a weighted evaluation result.

25. The apparatus of claim 24, wherein the determination unit (14) is further adapted to search for a maximum value from the weighted evaluation result corresponding to all the hypotheses of the cyclic prefix length thus to decide on the most-likely cyclic prefix length.

26. The apparatus of any of claims 18 to 25, configured as an application-specific integrated circuit, a mobile telephone or a network card.

**Patentansprüche**

1. Verfahren zum Bestimmen einer Sub-Frame Konfiguration eines Daten-Frames, wobei der Sub-Frame einen Satz von Slots umfasst, welche jeweils einen Satz von Datensymbolen umfassen, wobei jedes Datensymbol ein zyklisches Präfix umfasst, wobei das Verfahren die Schritte umfasst:

- Empfangen eines Datensignals umfassend wenigstens einen Sub-Frame mit einer spezifischen Sub-Frame Konfiguration, die wenigstens die Anzahl der Datensymbole pro Slot anzeigt, wobei es eine Vielzahl von möglichen Sub-Frame Konfigurationen gibt, wobei jede Sub-Frame Konfiguration durch eine zugeordnete zyklische Präfixlänge identifizierbar ist;
- Analysieren des Datensignals oder eines Teils davon, um eine damit in Verbindung stehende zyklische Präfixlänge zu identifizieren; und
- Bestimmen der im Datensignal enthaltenen Sub-Frame Konfiguration basierend auf der identifizierten zyklischen Präfixlänge.

2. Verfahren nach Anspruch 1, wobei der Analyseschritt umfasst:

- Bewerten einer oder mehrerer Hypothesen der zyklischen Präfixlänge bezüglich des Datensignals oder eines Teiles davon, um ein oder mehrere Bewertungsergebnisse zu erzeugen; und
- Feststellen einer wahrscheinlichsten zyklischen Präfixlänge basierend auf dem einen oder den mehreren Bewertungsergebnissen.

3. Verfahren nach Anspruch 2, wobei der Bewertungsschritt bezüglich jeder Hypothese umfasst:

- Durchführen einer Autokorrelation eines Abtastsignals umfassend den Sub-Frame über einen vorgegebenen Zeitraum, um ein Autokorrelationsergebnis zu erzeugen.

4. Verfahren nach Anspruch 3, wobei der Autokorrelationsschritt umfasst:

- Multiplizieren eines komplex-konjugierten, durch eine vorgegebene Länge verzögerten Abtastsignals mit dem aktuellen Wert des Abtastsignals.

5. Verfahren nach Anspruch 3 oder 4, wobei der Daten-Frame ferner einen Satz von Slots umfasst, und wobei der Bewertungsschritt bezüglich jeder Hypothese ferner umfasst:

- Durchführen einer oder mehrerer zyklischer Akkumulationen des Autokorrelationsergebnisses, um ein Ausgangssignal zu erzeugen.

6. Verfahren nach Anspruch 5, wobei der Bewertungsschritt bezüglich jeder Hypothese ferner umfast:

- Durchführen von C zyklischen Akkumulationen des Ausgangssignals mit einem Periodizitätsvektor, um ein Akkumulationsergebnis zu erzeugen, wobei C die Anzahl von Datensymbolen im Slot ist, die der bewerteten Hypothese entspricht.

7. Verfahren nach Anspruch 6, wobei der Bewertungsschritt bezüglich jeder Hypothese ferner umfasst:

- Berechnen einer Maximalgröße des Akkumulationsergebnisses als ein Bewertungsergebnis für die Hypothese.

8. Verfahren nach Anspruch 6 oder 7, wobei die C zyklischen Akkumulationen bezüglich der unterschiedlichen Hypothesen parallel durchgeführt werden.

9. Verfahren nach einem der Ansprüche 6 bis 8, wobei der Periodizitätsvektor einen Satz von Elementen mit dem Potenzial zur Bildung unterschiedlicher Sequenzen umfasst, wobei jede Sequenz einem möglichen Sub-Frame Anfang entspricht, wobei der Bewertungsschritt ferner umfasst:

- Durchführen der C zyklischen Akkumulationen mit dem Periodizitätsvektor bezüglich jeder möglichen Sequenz oder bezüglich einer bestimmten Sequenz.

10. Verfahren nach Anspruch 9, wobei die C zyklischen Akkumulationen bezüglich unterschiedlicher Sequenzen parallel durchgeführt werden.

11. Verfahren nach Anspruch 9 oder 10, wobei der Bewertungsschritt ferner umfasst:

- Berechnen, bezüglich jeder der unterschiedlichen Sequenzen, einer Maximalgröße des Akkumulationsergebnisses der C zyklischen Akkumulationen; und
- Auswählen der größten berechneten Maximalgröße als das Bewertungsergebnis für die jeweilige Hypothese.

12. Verfahren nach einem der Ansprüche 5 bis 11, wobei der Bestimmungsschritt bezüglich jeder Hypothese der zyklischen Präfixlänge umfasst:

- Gewichten eines jeden Bewertungsergebnisses durch einen Faktor, welcher die Anzahl der Datensymbole berücksichtigt, die während der jeweiligen zyklischen Akkumulationen angesammelt wurden, um ein gewichtetes Bewertungsergebnis zu erzeugen.

13. Verfahren nach Anspruch 12, wobei die Gewichtungsberechnung während oder nach dem letzten Lauf der zyklischen Akkumulationen durchgeführt wird.

14. Verfahren nach Anspruch 12 und 13, wobei der Bestimmungsschritt ferner umfasst:

- Suchen eines Maximalwerts aus den gewichteten Bewertungsergebnissen, welche allen Hypothesen der zyklischen Präfixlänge entsprechen und somit Festlegen der wahrscheinlichsten zyklischen Präfixlänge.

15. Verfahren nach Anspruch 14, wobei die Maximum-Suche mit einer a priori möglichen Sub-Frame Konfiguration verdeckt wird.

16. Computerprogrammprodukt umfassend Programmkodeteile zum Durchführen der Schritte nach einem der Ansprüche 1 bis 15, wenn das Computerprogrammprodukt in einem Computersystem ausgeführt wird.

17. Computerprogrammprodukt nach Anspruch 16, welches auf einem computerlesbaren Speichermedium abgespeichert ist.

18. Vorrichtung (10), welche dazu ausgebildet ist, eine Sub-Frame Konfiguration eines Daten-Frames zu bestimmen, wobei der Sub-Frame einen Satz von Slots umfasst, welche jeweils einen Satz von Datensymbolen umfassen, wobei jedes Datensymbol ein zyklisches Präfix umfasst, wobei die Vorrichtung umfasst:

- einen Eingang (16), welcher dazu ausgebildet ist ein Datensignal zu empfangen, welches wenigstens einen Sub-Frame mit einer spezifischen Sub-Frame Konfiguration umfasst, die wenigstens die Anzahl der Datensymbole pro Slot anzeigt, wobei es eine Vielzahl von möglichen Sub-Frame Konfigurationen gibt, wobei jede Sub-Frame Konfiguration durch eine zugeordnete zyklische Präfixlänge identifizierbar ist;
- eine Bewertungseinheit (12), welche dazu ausgebildet ist, das Datensignal oder einen Teil davon zu analysieren, um eine damit in Verbindung stehende zyklische Präfixlänge zu identifizieren;
- eine Bestimmungseinheit (14), welche dazu ausgebildet ist, die im Datensignal enthaltene Sub-Frame Konfiguration basierend auf der identifizierten zyklischen Präfixlänge zu bestimmten; und
- einen Ausgang (18), welcher dazu ausgebildet ist, die Sub-Frame Konfiguration auszugeben.

19. Verfahren nach Anspruch 18, wobei die Bewertungseinheit (12) dazu ausgebildet ist, eine oder mehrere Hypothesen der zyklischen Präfixlänge bezüglich des Datensignals oder eines Teiles davon zu bewerten, um ein oder mehrere Korrelationsergebnisse zu erzeugen; und wobei die Bestimmungseinheit (14) dazu ausgebildet ist, eine wahrscheinlichste zyklische Präfixlänge basierend auf dem einen oder den mehreren Bewertungsergebnissen festzustellen.

20. Vorrichtung nach Anspruch 19, wobei die Bewertungseinheit (12) ferner dazu ausgebildet ist, eine Autokorrelation eines den Sub-Frame umfassenden Abtastsignals über einen vorgegebenen Zeitraum durchzuführen, um ein Autokorrelationsergebnis zu erzeugen.

21. Vorrichtung nach Anspruch 20, wobei der Daten-Frame einen Satz von Slots umfasst, und wobei die Bewertungseinheit (12) ferner dazu ausgebildet ist, bezüglich jeder Hypothese eine oder mehrere zyklische Akkumulationen des Autokorrelationsergebnisses durchzuführen, um ein Ausgangssignal zu erzeugen.

22. Vorrichtung nach Anspruch 21, wobei die Bewertungseinheit (12) ferner dazu ausgebildet ist, bezüglich jeder Hypothese C zyklische Akkumulationen des Ausgangssignals mit einem Periodizitätsvektor durchzuführen, um ein Akkumulationsergebnis zu erzeugen, wobei C die Anzahl der Datensymbole im Slot ist, die der bewerteten Hypothese entspricht.

**23.** Vorrichtung nach Anspruch 22, wobei die Bewertungseinheit (12) ferner dazu ausgebildet ist, bezüglich jeder Hypothese eine Maximalgröße des Akkumulationsergebnisses als ein Bewertungsergebnis für die Hypothese zu berechnen.

**24.** Vorrichtung nach Anspruch 23, wobei die Bestimmungseinheit (14) ferner dazu ausgebildet ist, bezüglich jeder Hypothese der zyklischen Präfixlänge das Bewertungsergebnis mit einem Faktor zu gewichten, welcher die Anzahl der Datensymbole berücksichtigt, die während der jeweiligen zyklischen Akkumulationen angesammelt wurden, um ein gewichtetes Bewertungsergebnis zu erzeugen.

**25.** Vorrichtung nach Anspruch 24, wobei die Bestimmungseinheit (14) ferner dazu ausgebildet ist, nach einem Maximalwert aus den gewichteten Bewertungsergebnissen zu suchen, welche allen Hypothesen der zyklischen Präfixlänge entsprechen, und somit die wahrscheinlichste zyklische Präfixlänge zu bestimmen.

**26.** Vorrichtung nach einem der Ansprüche 18 bis 25, welche als anwendungsspezifischer integrierter Schaltkreis, als Mobiltelefon oder als Netzwerkkarte ausgebildet ist.

**Revendications**

**1.** Procédé de détermination d'une configuration d'une sous-trame d'une trame de données, la sous-trame comprenant un ensemble d'intervalles comprenant chacun un ensemble de symboles de données, chaque symbole de données comprenant un préfixe cyclique, le procédé comprenant les étapes de :

- réception d'un signal de données comprenant au moins une sous-trame ayant une configuration de sous-trame spécifique qui indique au moins le nombre de symboles de données par intervalle, dans lequel il existe une pluralité de configurations de sous-trame possibles, chaque configuration de sous-trame étant identifiable par une longueur de préfixe cyclique associé ;
- analyse du signal de données ou d'une partie de celui-ci pour identifier une longueur de préfixe cyclique associé avec celui-ci ; et
- détermination de la configuration de la sous-trame incluse dans le signal de données sur la base de la longueur de préfixe cyclique identifiée.

**2.** Procédé selon la revendication 1, dans lequel l'étape d'analyse comprend :

- l'évaluation d'une ou plusieurs hypothèses de la longueur de préfixe cyclique par rapport au signal de données ou à une partie de celui-ci pour produire un ou plusieurs résultats d'évaluation ; et
- la décision d'une longueur de préfixe cyclique la plus probable sur la base du ou des plusieurs résultats d'évaluation.

**3.** Procédé selon la revendication 2, dans lequel l'étape d'évaluation comprend, par rapport à chaque hypothèse :

- l'exécution d'une auto-corrélation d'un échantillon incluant la sous-trame sur une période prédéterminée pour produire un résultat d'auto-corrélation.

**4.** Procédé selon la revendication 3, dans lequel l'étape d'auto-corrélation comprend :

- la multiplication d'un conjugué complexe de l'échantillon retardé d'une longueur prédéterminée par la valeur courante de l'échantillon.

**5.** Procédé selon la revendication 3 ou 4, dans lequel la trame de données comprend en outre un ensemble d'intervalles, et dans lequel l'étape d'évaluation comprend en outre, par rapport à chaque hypothèse :

- l'exécution d'une ou plusieurs accumulations cycliques du résultat d'auto-corrélation pour produire un signal de sortie.

**6.** Procédé selon la revendication 5, dans lequel l'étape d'évaluation comprend en outre, par rapport à chaque hypothèse :

- l'exécution de C accumulations cycliques du signal de sortie avec un vecteur de périodicité pour produire un résultat d'accumulation, C étant le nombre de symboles de données dans l'intervalle correspondant à l'hypothèse évaluée.

**7.** Procédé selon la revendication 6, dans lequel l'étape d'évaluation comprend en outre, par rapport à chaque hypothèse :

- le calcul d'une grandeur maximum du résultat d'accumulation comme un résultat d'évaluation pour l'hypothèse.

**8.** Procédé selon la revendication 6 ou 7, dans lequel les C accumulations cycliques par rapport aux différentes hypothèses sont exécutées en parallèle.

**9.** Procédé selon l'une quelconque des revendications 6 à 8, dans lequel le vecteur de périodicité comprend un ensemble d'éléments ayant le potentiel de former différentes séquences, chaque séquence correspondant à un début de sous-trame possible, l'étape d'évaluation comprenant en outre :

- l'exécution des C accumulations cycliques avec le vecteur de périodicité par rapport à chaque séquence possible ou par rapport à une certaine séquence uniquement.

**10.** Procédé selon la revendication 9, dans lequel les C accumulations cycliques par rapport à différentes séquences sont exécutées en parallèle.

**11.** Procédé selon la revendication 9 ou 10, dans lequel l'étape d'évaluation comprend en outre

- le calcul, par rapport à chacune des différentes séquences, d'une grandeur maximum du résultat d'accumulation des C accumulations cycliques ; et
- la sélection de la plus grande des grandeurs maximum calculées comme le résultat d'évaluation pour les hypothèses respectives.

**12.** Procédé selon l'une quelconque des revendications 5 à 11, dans lequel l'étape de décision comprend, par rapport à chaque hypothèse de la longueur de préfixe cyclique

- la pondération de chaque résultat d'évaluation par un facteur qui prend en compte le nombre de symboles de données collectés pendant les accumulations cycliques respectives pour produire un résultat d'évaluation pondéré.

**13.** Procédé selon la revendication 12, dans lequel le calcul de pondération est exécuté pendant ou après la dernière passe d'accumulation cyclique.

**14.** Procédé selon les revendications 12 et 13, dans lequel l'étape de décision comprend en outre :

- la recherche d'une valeur maximum à partir des résultats d'évaluation pondérés correspondants à toutes les hypothèses de la longueur de préfixe cyclique, décidant ainsi de la longueur de préfixe cyclique la plus probable.

**15.** Procédé selon la revendication 14, dans lequel la recherche du maximum est masquée avec une configuration de sous-trame possible a priori.

**16.** Produit de programme informatique comprenant des parties de code de programme pour mettre en oeuvre les étapes selon l'une quelconque des revendications 1 à 15 lorsque le produit de programme informatique est exécuté sur un système d'ordinateur.

**17.** Produit de programme informatique selon la revendication 16, stocké sur un support d'enregistrement lisible par un ordinateur.

**18.** Appareil (10) adapté à déterminer une configuration d'une sous-trame d'une trame de données, ladite sous-trame comprenant un ensemble d'intervalles comprenant chacun un ensemble de symboles de données, chaque symbole de données comprenant un préfixe cyclique, l'appareil comprenant :

- une entrée (16) adaptée à recevoir un signal de données comprenant au moins une sous-trame ayant une configuration de sous-trame spécifique qui indique au moins le nombre de symboles de données par intervalle, dans lequel il existe une pluralité de configurations de sous-trame possibles, chaque configuration de sous-trame étant identifiable par une longueur de préfixe cyclique associé ;
- une unité d'évaluation (12) adaptée à analyser le signal de données ou une partie de celui-ci pour identifier une longueur de préfixe cyclique associé avec celui-ci ;
- une unité de détermination (14) adaptée à déterminer la configuration de la sous-trame incluse dans le signal de données sur la base de la longueur de préfixe cyclique identifiée ; et
- une sortie (18) adaptée à délivrer en sortie la configuration de sous-trame.

19. Appareil selon la revendication 18, dans lequel l'unité d'évaluation (12) est adaptée à évaluer une ou plusieurs hypothèses de la longueur de préfixe cyclique par rapport au signal de données ou à une partie de celui-ci pour produire un ou plusieurs résultats d'évaluation ; et dans lequel l'unité de détermination (14) est adaptée à décider d'une longueur de préfixe cyclique la plus probable sur la base du ou des plusieurs résultats d'évaluation.

20. Appareil selon la revendication 19, dans lequel l'unité d'évaluation (12) est en outre adaptée à exécuter une auto-corrélation d'un échantillon incluant la sous-trame sur une période prédéterminée pour produire un résultat d'auto-corrélation.

21. Appareil selon la revendication 20, dans lequel la trame de données comprend un ensemble d'intervalles, et dans lequel l'unité d'évaluation (12) est en outre adaptée à, par rapport à chaque hypothèse, exécuter une ou plusieurs accumulations cycliques du résultat d'auto-corrélation pour produire un signal de sortie.

22. Appareil selon la revendication 21, dans lequel l'unité d'évaluation (12) est en outre adaptée à, par rapport à chaque hypothèse, exécuter C accumulations cycliques du signal de sortie avec un vecteur de périodicité pour produire un résultat d'accumulation, C étant le nombre de symboles de données dans l'intervalle correspondant à l'hypothèse évaluée.

23. Appareil selon la revendication 22, dans lequel l'unité d'évaluation (12) est en outre adaptée à, par rapport à chaque hypothèse, calculer une grandeur maximum du résultat d'accumulation comme un résultat d'évaluation pour l'hypothèse.

24. Appareil selon la revendication 23, dans lequel l'unité de détermination (14) est en outre adaptée à, par rapport à chaque hypothèse de la longueur de préfixe cyclique, pondérer le résultat d'évaluation par un facteur qui prend en compte le nombre de symboles de données collectés pendant les accumulations cycliques respectives pour produire un résultat d'évaluation pondéré.

25. Appareil selon la revendication 24, dans lequel l'unité de détermination (14) est en outre adaptée à rechercher une valeur maximum à partir du résultat d'évaluation pondéré correspondant à toutes les hypothèses de la longueur de préfixe cyclique, pour ainsi décider de la longueur de préfixe cyclique la plus probable.

26. Appareil selon l'une quelconque des revendications 18 à 25, configuré comme un circuit intégré à application spécifique, un téléphone mobile ou une carte réseau.

One radio frame, $T_f = 307200T_s = 10$ ms

One slot, $T_{slot} = 15360T_s = 0.5$ ms

| #0 | #1 | #2 | #3 | ············ | #18 | #19 |

One subframe

Fig. 1

$T_{slot}$

$T_{cp}$   $T_u$

Fig. 2

| | Sub-frame configuration | No. of data symbols in slot | Cyclic prefix length (in data symbols) | IFFT length (size) |
|---|---|---|---|---|
| 1 | Normal cyclic prefix $\Delta f = 15\,\text{kHz}$ | 7 | $n_{cp,0}^{(1a)} = 160$ (for the first symbol in the slot); $n_{cp,0}^{(1b)} = 144$ (for the other symbols in the slot) | $n_{0,0}^{(1)} = 2048$ |
| 2 | Extended cyclic prefix $\Delta f = 15\,\text{kHz}$ | 6 | $n_{cp,0}^{(2)} = 512$ (for all 6 symbols in slot) | $n_{0,0}^{(2)} = 2048$ |
| 3 | Extended cyclic prefix $\Delta f = 7.5\,\text{kHz}$ | 3 | $n_{cp,0}^{(3)} = 1024$ (for all 3 symbols in the slot) | $n_{0,0}^{(3)} = 4096$ |

Fig. 3

Fig. 4

**12**

Receive Data Signal — 16 → **1** Auto-Correlation → **2** Cyclic Accumulation → **3** Cyclic Accumulation → **4** Calculate Max. Magn. → To DCPL for Sub-Frame Determination

Fig. 5

Step 1    $\Lambda$    Step 2    $\Lambda_{slot}$    Step 3    $\Lambda_{cyc}$    Step 4    Step 4b    $\Lambda_{max}$

$r$ → $n_0 = 128$

$C = 7$   $\underline{P} = [137,137,137,137,137,137]$
$C = 7$   $\underline{P} = [138,137,137,137,137,137]$
$C = 7$   $\underline{P} = [137,138,137,137,137,137]$
$C = 7$   $\underline{P} = [137,137,138,137,137,137]$
$C = 7$   $\underline{P} = [137,137,137,138,137,137]$
$C = 7$   $\underline{P} = [137,137,137,137,138,137]$
$C = 7$   $\underline{P} = [137,137,137,137,137,138]$

max → $\Lambda_{max}^{(1)}$

$C = 6$   $\underline{P} = [160,160,160,160,160]$

$\Lambda_{max}^{(2)}$

$n_0 = 256$ → $C = 3$   $\underline{P} = [320,320]$

$\Lambda_{max}^{(3)}$

Fig. 6

18

Fig. 7

Fig. 8

**EP 2 091 195 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20060176966 A1